# EUROPÄISCHE PATENTANMELDUNG

(11) **EP 0 626 432 A1**
(43) Veröffentlichungstag der Anmeldung: **30.11.1994**
(21) Anmeldenummer: 94107970.9
(22) Anmeldetag: 25.05.1994
(51) Int. Cl.: C09D 151/08, C08G 18/63, C09D 175/04

(54) **Emulgatorfreies Überzugsmittel, dessen Herstellung und Verwendung**

(30) Priorität: 28.05.1993 DE 4317792
(71) Anmelder: Herberts Gesellschaft mit beschränkter Haftung, D-42285 Wuppertal (DE)
(72) Erfinder: Duecoffre, Volker, D-42119 Wuppertal (DE); Flosbach, Carmen, Dr., D-42115 Wuppertal (DE); Schubert, Walter, Dr., D-42349 Wuppertal (DE); Krumme, Manfred, D-50374 Erftstadt (DE); Stephan, Werner, D-42111 Wuppertal (DE); Sadowski, Fritz, Dr., D-50259 Pulheim-Brauweiler (DE)
(74) Vertreter: Türk, Gille, Hrabal, Leifert

(57) **Zusammenfassung**

Emulgatorfreies Überzugsmittel in Form einer wäßrigen Emulsion, Verfahren zu dessen Herstellung und Verwendung. Der Harzanteil des Überzugsmittels besteht aus
A) 30 bis 70 Gew.-% eines nach Neutralisation mit Basen wasserverdünnbarer Polyesteroligomer-Polyacrylates, erhältlich durch radikalische Polymerisation von
   50 bis 95 Gew.-% eines oder mehrerer Ester ungesättigter Carbonsäuren mit hydrophoben und hydrophilen Anteilen, wobei
   a) die hydrophoben Anteile auf monomeren Estern ungesättigter Carbonsäuren mit sekundären OH-Gruppen basieren, die im Gemisch mit OH-Gruppen-freien Comonomeren vorliegen können, und
   b) die hydrophilen Anteile auf monomeren Estern ungesättigter Carbonsäuren mit primären OH-Gruppen und ungesättigten Monomeren mit COOH-Gruppen basieren, die im Gemisch mit OH-Gruppen-freien Comonomeren vorliegen können,
   wobei das Zahlenverhältnis von aus den Komponenten b) und a) stammenden primären zu sekundären OH-Gruppen im Copolymeren 1 : 1,5 bis 1 : 2,5 beträgt, in
   5 bis 50 Gew.-% eines oder mehrerer hydroxyfunktioneller Polyesteroligomerer, erhältlich durch Polykondensation von einem oder mehreren Diolen und/oder Polyolen und einer oder mehreren Dicarbonsäuren und/oder deren Derivaten, mit einem errechneten Molekulargewicht von 200 bis 1000, einer Hydroxylzahl von 100 bis 600 und einer Säurezahl von 0 bis 15,
   wobei die Monomeren a) und b) in derartigen Mengen eingesetzt werden, daß das Polyesteroligomer-Polyacrylat eine Hydroxylzahl von 100 bis 390 und eine Säurezahl von 16 bis 50 aufweist,
   wobei sich die Gew.-% jeweils auf den Festkörpergehalt beziehen und auf 100 Gew.-% addieren; und
B) 70 bis 30 Gew.-% eines oder mehrerer Polyisocyanate mit freien NCO-Gruppen
   wobei sich die Gew.-% der Komponenten A) und B) jeweils auf das Festkörpergewicht der Harze beziehen und auf 100 Gew.-% addieren, und das Verhältnis von OH-Gruppen der Komponente A) und freien NCO-Gruppen der Komponenten B) bei 0,5 : 1 bis 2 : 1 liegt;
   das Überzugsmittel enthält zusätzlich Wasser und gegebenenfalls ein oder mehrere organische Lösemittel, Pigmente, Füllstoffe und/oder lackübliche Hilfs- und Zusatzstoffe.

## Beschreibung

Die Erfindung betrifft ein Überzugsmittel auf der Basis selbstemulgierender Copolymerer, insbesondere auf Polyesteroligomer-Polyacrylatbasis und Neutralisationsmittel, das mit Polyisocyanaten vernetzt wird und das übliche Lackzusatzstoffe wie Pigmente, Füllstoffe und/oder organische Lösemittel enthalten kann. Das wäßrige Überzugsmittel ist für die Herstellung von Lackierungen, insbesondere für Mehrschichtlackierungen als Basislack, bevorzugt als Klarlack, Füller und/oder Decklack verwendbar.

Der Aufbau von Mehrschichtlackierungen ist insbesondere aus dem Sektor des Kraftfahrzeugbaus bekannt. Dabei ist es günstig, auf einer Basislackschicht nach kurzer Antrocknungszeit "naß-in-naß" eine Klarlackschicht aufzubringen, worauf dann ein gemeinsames Aushärten erfolgt.

In der älteren, nicht vorveröffentlichten deutschen Patentanmeldung P 42 23 183.3 werden wäßrige Emulsionen auf der Basis von Acrylcopolymeren beschrieben, die im Schoße eines oder mehrerer niedermolekularer Polyester synthetisiert und anschließend mit einem Gemisch aus Melaminharzen und verkappten Polyisocyanaten vernetzt werden.

Es ist auch bekannt unverkappte Polyisocyanatverbindungen im wäßrigen Medium einzusetzen. So werden in der EP-A-0 358 979, DE-A-4 101 696 und der DE-A-3 829 589 wäßrige Dispersionen von Polyhydroxyacrylatharzen beschrieben, in die beliebige "Lackpolyisocyanate" einemulgierbar sind. Die EP-A-0 496 205 beschreibt eine wäßrige Dispersion eines hydroxyfunktionellen Polyesterharzes in das beliebige Polyisocyanate einemulgiert werden können.

In den EP-A-0 206 059, EP-A-0 061 628, EP-A-0 310 345 und EP-A-0 019 844 werden Emulgatoren für Polyisocyanate beschrieben, die Umsetzungsprodukte von Polyisocyanaten mit hydrophilen Polyalkylenether-Alkoholen darstellen. Die wäßrigen Polyisocyanatemulsionen dienen als Härter für wäßrige Klebstoffe bzw. Formkörper.

In der DE-A-41 37 429 werden wäßrige Bindemittelkombinationen beschrieben, die eine Polyolkomponente aus einem Gemisch von mindestens zwei Polyesterharzen, wovon eines ein Acrylat-gepfropftes Polyesterharz sein kann, enthält. Daraus erstellte Überzugsmittel haben eine starke Vergilbungsneigung. In der EP-A-0 391 271 werden wäßrige Überzugsmittel beschrieben, die ein wasserlösliches Polyesteroligomer-Polyacrylat und Aminharzvernetzer enthalten.

Aufgabe der Erfindung ist die Bereitstellung von Oligoesteracrylatharzen mit hohem Festkörper und vergleichsweise niedriger Viskosität, sowie von wäßrigen Überzugsmitteln mit geringem Gehalt an organischen Lösemitteln, die zu Überzügen mit hoher Chemikalienbeständigkeit, insbesondere hoher Beständigkeit gegen Säuren und Ölruß, und mit sehr geringer Vergilbungstendenz führen.

Es hat sich gezeigt, daß diese Aufgabe gelöst werden kann durch eine einen Gegenstand der Erfindung bildende wäßrige Überzugsmittelzusammensetzung in der Form einer emulgatorfreien wäßrigen Emulsion, deren Harzanteil besteht aus:
A) 30 bis 70 Gew.-% eines nach Neutralisation mit Basen wasserverdünnbarer Polyesteroligomer-Polyacrylates, erhältlich durch radikalische Polymerisation von
   50 bis 95 Gew.-% eines oder mehrerer Ester ungesättiger Carbonsäuren mit hydrophoben und hydrophilen Anteilen, wobei
   a) die hydrophoben Anteile auf monomeren Estern ungesättigter Carbonsäuren mit sekundären OH-Gruppen basieren, die im Gemisch mit OH-Gruppen-freien Comonomeren vorliegen können und
   b) die hydrophilen Anteile auf monomeren Estern ungesättigter Carbonsäuren mit primären OH-Gruppen und ungesättigten Monomeren mit COOH-Gruppen basieren, die im Gemisch mit OH-Gruppen-freien Comonomeren vorliegen können, wobei das Zahlenverhältnis von aus den Komponenten b) und a) stammenden primären zu sekundären OH-Gruppen im Copolymeren 1 : 1,5 bis 1 : 2,5 beträgt, in
   5 bis 50 Gew.-% eines oder mehrerer hydroxyfunktioneller Polyesteroligomerer, erhältlich durch Polykondensation von Diolen und/ oder Polyolen und Dicarbonsäuren und/oder deren Derivaten, gegebenenfalls unter Mitverwendung von einem oder mehreren Monoalkoholen und/oder einer oder mehreren Monocarbonsäuren, mit einem errechneten Molekulargewicht von 200 bis 1000, vorzugsweise von 300 bis 600, einer Hydroxylzahl von 100 bis 600, bevorzugt 200 bis 500, und einer Säurezahl von 0 bis 15, bevorzugt 0 - 1,5, wobei die Monomeren a) und b) in derartigen Mengen eingesetzt werden, daß das erhaltene Polyesteroligomer-Polyacrylat eine Hydroxylzahl von 100 bis 390, eine Säurezahl von 16 bis 50, bevorzugt 20 bis 30 und ein Zahlenmittel des Molekulargewichts (Mn) von 1000 bis 10000, bevorzugt 1000 bis unter 3000, aufweist (Gew.-% beziehen sich jeweils auf den Festkörpergehalt und addieren sich auf 100 Gew.-%) und
B) 70 bis 30 Gew-%, bevorzugt 60 bis 40 Gew.-%, eines oder mehrerer Polyisocyanate, mit freien NCO-Gruppen,
   wobei sich die Gewichtsprozente der Komponenten A) und B) jeweils auf das Festkörpergewicht der Harze beziehen und auf 100 Gew.-% addieren, und das Verhältnis von OH-Gruppen der Komponente A) und NCO-Gruppen der Komponente B) bei 0,5 : 1 bis 2 : 1, bevorzugt 0,8 : 1 bis 1,2 : 1 liegt,
   und das zusätzlich Wasser und gegebenenfalls ein oder mehrere organische Lösemittel, Pigmente, Füllstoffe und/oder lackübliche Hilfs- und Zusatzstoffe enthält.

Die Bindemittelkomponente A) des erfindungsgemäßen Überzugsmittels kann durch Polymerisation der Komponenten a) und b) in dem Polyesteroligomeren hergestellt werden. Beispielsweise kann man so vorgehen, daß 5 bis 50 Gewichtsteile (bezogen auf den Festkörper von A)) eines hydroxyfunktionellen Polyesteroligomeren, wie vorstehend definiert, vorgelegt werden und darin 95 bis 50 Gewichtsteile (bezogen auf den Festkörper von A)) von Estern ungesättigter Carbonsäuren mit hydrophoben und hydrophilen Anteilen, basierend auf den vorstehend definierten Komponenten a) und b) darin polymerisiert werden. Dabei addieren sich die Gewichtsteile der Komponenten a), b) und Polyesteroligomer auf 100 Gewichtsteile. Die Mengenanteile der Komponenten b) und a) werden so gewählt, daß das Zahlenverhältnis von primären zu sekundären OH-Gruppen im erhaltenen Copolymeren (ohne Berücksichtigung der OH-Gruppen des Polyesteroligomeren) 1 : 1,5 bis 1 : 2,5 beträgt.

Der hydrophobe Anteil a) der Komponente A) der erfindungsgemäßen Überzugsmittel wird durch Copolymerisation von einem oder mehreren Estern ungesättigter Carbonsäuren mit einer Alkoholkomponente, die noch mindestens eine sekundäre Hydroxylgruppe enthält, in Gegenwart eines Polyesteroligomeren erhalten. Beispiele für die ungesättigte Carbonsäure der ungesättigten Estermonomeren sind (Meth)acrylsäure (unter (Meth)acryl bzw. (meth)acryl wird hier und im Folgenden Methacryl und/oder Acryl bzw. methacryl und/oder acryl verstanden), Maleinsäure und Crotonsäure. Die Alkoholkomponente der Estermonomeren auf der Basis ungesättigter Carbonsäuren enthält bevorzugt 3 bis 25 Kohlenstoffatome. Sie kann auf kurzkettigen aliphatischen Alkoholen, langkettigen aliphatischen Alkoholen sowie auf Kondensationsprodukten von Alkoholen oder Glycidylverbindungen mit Fettsäuren basieren.

Die selbstemulgierenden Copolymeren der Komponente A) werden im Folgenden zur Vereinfachung auch als Acrylcopolymere bezeichnet. Sie basieren jedoch nur bevorzugt auf Monomeren auf der Basis von Estern der (Meth)acrylsäure; der vereinfachende Ausdruck schließt die Ester anderer, ungesättigter Carbonsäuren, wie vorstehend definiert, ein.

Beispiele für die hydrophoben Monomeren mit sekundären OH-Funktionen sind:
Hydroxypropyl(meth)acrylat, Addukte aus Glycidyl(meth)acrylat und gesättigten kurzkettigen Fettsäuren mit C₁ - C₃ Alkylresten, z.B. Essigsäure oder Propionsäure, sowie Addukte aus Cardura E (Glycidylester der Versaticsäure) mit ungesättigten COOH-funktionellen Verbindungen, wie z.B. Acryl- bzw. Methacrylsäure, Maleinsäure, Crotonsäure, Addukte aus Cardura E mit ungesättigten Anhydriden wie z.B. Maleinsäureanhydrid, Umsetzungsprodukte aus Glycidyl(meth)acrylat mit gesättigten verzweigten oder unverzweigten Fettsäuren mit C₄ - C₂₀ -Alkylresten, z.B. Butansäure, Capronsäure, Laurinsäure, Palmitinsäure, Stearinsäure.

Der hydrophile Anteil b) der Komponente A) der erfindungsgemäßen Überzugsmittel wird aus Monomeren auf der Basis von Estern ungesättigter Carbonsäuren, wie (Meth)acrylsäure, Maleinsäure und Crotonsäure mit mindestens einer primären OH-Gruppe im Alkoholteil hergestellt. Die Alkoholkomponente der ungesättigten Estermonomeren kann beispielsweise 2 bis 18 Kohlenstoffatome aufweisen.

Beispiele für die Monomeren zum Aufbau des hydrophilen Anteils der Komponente A) sind:
Hydroxyalkylester der Acrylsäure und/oder Methacrylsäure mit einer primären OH-Gruppe und einem C₂ - C₃ -Hydroxyalkylrest wie Hydroxyethyl(meth)acrylat, sowie Hydroxyalkylester der Acrylsäure und/oder Methacrylsäure mit einer primären OH-Gruppe und einem C₄ - C₁₈-Hydroxyalkylrest wie z.B. Butandiolmonoacrylat, Hydroxyhexylacrylat, Hydroxyoctylacrylat und die entsprechenden Methacrylate und Umsetzungsprodukte von Hydroxyethyl(meth)arylat mit Caprolacton.

Die hydrophilen Anteile der Komponente A) enthalten auch Carboxylgruppen, zu deren Einführung bei der Herstellung der Komponente A ein oder mehrere carboxylfunktionalisierte Monomere mitverwendet werden, wie z.B. ungesättigte Mono- und Dicarbonsäuren, z.B. Acrylsäure, Methacrylsäure und Crotonsäure. Weitere verwendbare carboxylfunktionalisierte Monomere sind ungesättigte Anhydride wie Maleinsäureanhydrid, sowie Halbester von Dicarbonsäuren, wie z.B. Maleinsäureanhydrid durch Anlagerung von gesättigten aliphatischen Alkoholen wie z.B. Ethanol, Propanol, Butanol und/oder Isobutanol.

Bei der Herstellung der Komponente A) können weitere Comonomere mitverwendet werden, die frei von OH-Gruppen sind. Beispiele hierfür sind langkettige, verzweigte oder unverzweigte ungesättigte Monomere, wie Alkyl(meth)acrylate mit C₈ - C₁₈-Ketten im Alkylteil, z.B. Ethylhexyl(meth)acrylat, Octyl(meth)acrylat, 3,5,5-Trimethylhexyl(meth)acrylat, Decyl(meth)acrylat, Dodecyl(meth)acrylat, Hexadecyl(meth)acrylat, Octadecyl(meth)acrylat, Laurylacrylat, Isobornyl(meth)acrylat, 4-Tertiärbutylcyclohexylmethacrylat. Weitere Beispiele sind kurz- und mittelkettige, verzweigte oder unverzweigte ungesättigte Monomere, wie Alkyl(meth)acrylate mit C₁ - C₇-Ketten im Alkylteil, z.B. Methyl(meth)acrylat, Ethyl(meth)acrylat, Propyl(meth)acrylat, Butyl(meth)acrylat, Isobutyl(meth)acrylat, Tertiärbutyl(meth)acrylat, Pentyl(meth)acrylat, Hexyl(meth)acrylat, Cyclohexyl(meth)acrylat. Ebenfalls möglich ist die Verwendung von Di- oder Triacrylaten wie z.B. Hexandioldiacrylat-1,6 oder Trimethylolpropantriacrylat. Da dann das Polymere verzweigt, muß gegebenenfalls ein Regler wie z.B. Mercaptoethanol zugefügt werden. Es können auch aromatische Vinylverbindungen, wie Styrol und Styrolderivate, wie Vinyltoluol und p-Methylstyrol als Comonomere mitverwendet werden.

Die Mengen der mitverwendeten Comonomeren können derart abgestimmt werden, daß die gewünschten Parameter, wie Säurezahl, Hydroxylzahl und Molekulargewicht erzielt werden.

Wie erwähnt, erfolgt die Herstellung der Copolymeren der Komponente A) durch Copolymerisation der Komponenten a) und b) in Gegenwart eines Polyesteroligomeren. Es handelt sich um eine radikalische Copolymerisation, bei der die Mengen der Monomeren und Polyesteroligomeren so abgestimmt werden, daß die gewünschten Spezifikationen bezüglich Molmasse, OH-Gruppenverhältnis, OH-Zahl und Säurezahl erzielt werden.

Die Herstellung erfolgt beispielsweise als radikalische Lösungspolymerisation in Anwesenheit eines Polyesteroligomeren und eines Radikalinitiators, wie sie dem Fachmann bekannt ist. Beispiele für Radikalinitiatoren sind Dialkylperoxide, wie Di-tert.-Butylperoxid, Di-cumylperoxid; Diacylperoxide, wie Di-benzoylperoxid, Dilaurylperoxid; Hydroperoxide, wie Cumolhydroperoxid, tert.-Butylhydroperoxid; Perester, wie tert.-Butylperbenzoat, tert.-Butyl-perpivalat, tert.-Butyl-per-3,5,5-trimethylhexanoat, tert.-Butyl-per-2-ethylhexanoat; Peroxiddicarbonate, wie Di-2-ethylhexylperoxydicarbonat, Dicyclohexylperoxydicarbonat; Perketale, wie 1,1-Bis-(tert.-Butylperoxy)3,5,5-trimethylcyclohexan, 1,1-Bis-(tert.-Butylperoxy)cyclohexan; Ketonperoxide, wie Cyclohexanperoxid, Methylisobutylketonperoxid und Azo-Verbindungen, wie 2,2'-Azo-bis(2,4-dimethyl-valeronitril), 2,2'-Azo-bis(2-methylbutyronitril), 1,1'-Azo-bis-cyclohexancarbonitril, Azo-bis-isobutyronitril.

Die Polymerisationsinitiatoren werden im allgemeinen beispielsweise in einer Menge von 0,1 bis 4 Gew.-%, bezogen auf die Monomeren-Einwaage, zugesetzt.

Die radikalische Polymerisation kann im Eintopfverfahren unter Erzielung einer statistischen Verteilung von hydrophoben und hydrophilen Anteilen durchgeführt werden.

Es kann z.B. so gearbeitet werden, daß alle notwendigen Monomeren sowie der oder die Initiatoren in einem Vorratsgefäß gemischt werden; anschließend wird über einen Zeitraum von z.B. 5 Stunden in ein z.B. 140°C heißes Gemisch aus einem oder mehreren Lösemitteln und Polyesteroligomeren oder Polyesteroligomeren allein unter Rühren zudosiert. Die hierbei entstehenden Copolymeren besitzen dann eine statische Verteilung der primären und sekundären Hydroxy- sowie Carboxyfunktionen.

Es ist jedoch auch möglich, eine Blockpolymerisation zur Erzielung von Copolymerisaten mit hydrophoben und hydrophilen Blöcken durchzuführen. Zur Herstellung der Blockcopolymerisate kann in üblicher Arbeitsweise vorgegangen werden. Es können beispielsweise zunächst Gemische aus hydrophoben Monomeren (gegebenenfalls zusammen mit weiteren Comonomeren) polymerisiert werden, worauf dann hydrophile Monomere (gegebenenfalls mit Comonomeren) zudosiert und weiter polymerisiert werden. In der Praxis ist es beispielsweise möglich, zuerst ein Gemisch aus hydrophoben, hydroxyfunktionellen Monomeren, (Meth)acrylsäureestern sowie gegebenenfalls z.B. Vinylaromaten zuzudosieren und anschließend ein weiteres Gemisch aus hydrophilen, hydroxyfunktionellen Monomeren, (Meth)acrylsäureestern, Vinylaromaten und COOH-funktionellen Monomeren zuzudosieren. Die hierbei entstehenden Copolymeren besitzen dann ein hydrophobes und ein hydrophiles Kettenende, wodurch z.B. diesen Copolymeren ein Emulgatorcharakter zukommen kann. Natürlich ist es auch möglich, die einzelnen Monomeren separat und gegebenenfalls auch zeitversetzt zuzudosieren.

Durch die Copolymerisation der Komponenten a) und b) in Gegenwart von Polyesteroligomeren, bei der Herstellung der Komponente A) kann die Menge der eingesetzten und später gegebenenfalls abzudestillierenden Lösemittel stark reduziert werden. Es ist sogar möglich, Lösemittel völlig zu vermeiden und allein die Polyesteroligomeren als Lösemittel für die Herstellung der Komponente A) zu verwenden.

Die bei der Herstellung der Komponente A) verwendeten Polyesteroligomeren können z.B. aus einem oder mehreren Diolen und/oder Polyolen, gegebenenfalls in Anwesenheit von einem oder mehreren Monoalkoholen, durch Kondensation mit einer oder mehreren Dicarbonsäuren und/oder deren Derivaten hergestellt werden. Die Polykondensation erfolgt nach üblichen, dem Fachmann geläufigen Verfahren, beispielsweise in Gegenwart von üblichen Veresterungskatalysatoren und beispielsweise bei erhöhten Temperaturen von z.B. 180 bis 230°C in der Schmelze.
Die Polyesteroligomeren werden bevorzugt aus aliphatischen und/oder cycloaliphatischen Ausgangsverbindungen (Alkoholen und Säuren) hergestellt und sind besonders bevorzugt frei von aromatischen Bausteinen.

Beispiele für verwendbare Polyole sind solche mit mehr als zwei OH-Gruppen, wie aliphatische Triole und Tetrole mit 2 bis 6 Kohlenstoffatomen, wie Trimethylolethan, Trimethylolpropan, Glycerin, 1,2,4-Butantriol, 1,2,6-Hexantriol und Pentaerythrit.

Ebenfalls möglich ist es, einen oder mehrere monofunktionelle Alkohole, wie z.B. Monoalkanole mit verzweigten oder unverzweigten Alkylresten, mit beispielsweise 1 bis 20 C-Atomen miteinzusetzen. Beispiele hierfür sind Methanol, Ethanol, Propanol, Isopropanol, Laurylalkohol und Stearylalkohol.
Beispiele für die Dicarbonsäuren sind aliphatische gesättigte und ungesättigte Dicarbonsäuren, wie z.B. Maleinsäure, Fumarsäure, Bernsteinsäure, Adipinsäure, Azelainsäure, Sebacinsäure; cycloaliphatische gesättigte und ungesättigte Dicarbonsäuren und aromatische Dicarbonsäuren, wie Phthalsäure, Isophthalsäure, Tetra-, Hexa-, Endomethylentetrahydrophthalsäure, Endoethylentetrahydrophthalsäure und Cyclohexandicarbonsäure (1,2; 1,3 und 1,4), Itaconsäure, Muconsäure und Camphersäure oder gegebenenfalls deren mögliche Anhydride.

Ebenfalls möglich ist die Mitverwendung von monofunktionellen Carbonsäuren, wie z.B. Essigsäure, Propionsäure, Laurylsäure oder Stearylsäure.

Beispiele für verwendbare Diole sind aliphatische Diole, wie z.B. Ethylenglykol, Propylenglykol-(1,3 und 1,2), Butandiol, Hexandiol-(1,6), Neopentylglykol, 2-Butyl-2-ethyl-propandiol-1,3; Polyetherglykole des Ethylens und Propylens mit bis zu 6 Monomerbausteinen, wie Diethylenglykol, Triethylenglykol, Tetraethylenglykol und Hexaethylenglykol; und cycloaliphatische Diole, wie 1,3-Dimethylolcyclohexan und 1,4-Dimethylolcyclohexan.

Die erfindungsgemäßen Überzugsmittel enthalten als Vernetzer (Komponente B)) ein oder mehrere Polyisocyanate. Es handelt sich dabei um Polyisocyanate mit freien, d.h. unverkappten Isocyanatgruppen (NCO-Gruppen). Beispiele für einsetzbare Polyisocyanate sind cycloaliphatische, aliphatische oder aromatische Polyisocyanate wie Tetramethylen-diisocyanat, Hexamethylendiisocyanat, 2,2,4-Trimethylendiisocyanat, 1,12-Dodecandiisocyanat, Cyclohexan-1,3- und 1,4-diisocyanat, 1-Isocyanato-3,3,5-trimethyl-5-isocyanato-methylcyclohexan (=Isophorondiisocyanat IPDI), Perhydro-2,4'- und/oder -4,4'-diphenylmethandiisocyanat, 1,3- und 1,4-Phenylendiisocyanat, 2,4- und 2,6-Toluylendiisocyanat, Diphenylmethan-2,4'- und/oder -4,4'-diisocyanat, 3,2'- und/oder 3,4-Diisocyanato-4-methyldiphenylmethan, Naphthylen-1,5-diisocyanat, Triphenylmethan-4,4'-triisocyanat, Tetramethylxylylendiisocyanat oder Gemische dieser Verbindungen.

Ebenfalls möglich ist die Verwendung von Copolymeren des vinylisch ungesättigten Monoisocyanats, Dimethyl-m-isopropenylbenzylisocyanat, wie sie unter anderem in DE-A 41 37 615 beschrieben sind.

Neben diesen einfachen Isocyanaten sind auch solche geeignet, die Heteroatome in dem die Isocyanatgruppen verknüpfenden Rest enthalten. Beispiele hierfür sind Carbodiimidgruppen, Allophanatgruppen, Isocyanuratgruppen, Urethangruppen, acylierte Harnstoffgruppen und Biuretgruppen aufweisende Polyisocyanate.

Besonders gut für die Erfindung geeignet sind die bekannten Polyisocyanate, die hauptsächlich bei der Herstellung von Lacken eingesetzt werden, z.B. Biuret-, Isocyanurat- oder Urethangruppen aufweisende Modifizierungsprodukte der oben genannten einfachen Polyisocyanate, insbesondere Tris-(6-Isocyanatohexyl)-biuret oder niedermolekulare, Urethangruppen aufweisende Polyisocyanate, wie sie durch Umsetzung von im Überschuß eingesetzten IPDI mit einfachen mehrwertigen Alkoholen des Molekulargewichtsbereiches 62 - 300, insbesondere mit Trimethylolpropan erhalten werden können. Selbstverständlich können auch beliebige Gemische der genannten Polyisocyanate zur Herstellung der erfindungsgemäßen Produkte eingesetzt werden.

Geeignete Polyisocyanate sind ferner die bekannten, endständige Isocyanatgruppen aufweisende Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanatgruppen reaktionsfähigen Gruppen zugänglich sind. Als solche kommen bevorzugt insgesamt mindestens zwei Aminogruppen und/oder Hydroxylgruppen aufweisende Verbindungen mit einem Zahlenmittel der Molmasse von 300 bis 10000, vorzugsweise 400 bis 6000, zur Anwendung.

In diesen bekannten Prepolymeren entspricht das Verhältnis von Isocyanatgruppen zu gegenüber NCO reaktiven Wasserstoffatomen bevorzugt 1,05 bis 10 : 1, besonders bevorzugt 1,1 bis 3 : 1, wobei die Wasserstoffatome vorzugsweise aus Hydroxylgruppen stammen.

Die Art und Mengenverhältnisse der bei der Herstellung von NCO-Prepolymeren eingesetzten Ausgangsmaterialien werden im übrigen vorzugsweise so gewählt, daß die NCO-Prepolymeren a) eine mittlere NCO-Funktionalität von 2 bis 4, vorzugsweise von 2 bis 3 und b) ein Zahlenmittel der Molmasse von 500 - 10000, vorzugsweise von 800 - 4000 aufweisen.

Ebenfalls möglich ist es Polyisocyanate einzusetzen, die hydrophil modifiziert sind wie z.B. in EP-A-0 206 059, EP-A-0 061 628, EP-A-0 310 345 oder EP-A-0 019 844 beschrieben.

Die erfindungsgemäßen Überzugsmittel können lackübliche Lösemittel in Mengen von beispielsweise bis zu 20 Gew.-%, z.B. 5 bis 20 Gew.-%, enthalten. Beispiele für derartige Lösemittel sind organische Lösemittel, wie aliphatische und aromatische Kohlenwasserstoffe, beispielsweise Toluol, Xylole, Gemische aliphatischer und/oder aromatischer Kohlenwasserstoffe sowie Ester, Ether und Alkohole.

Zur Herstellung der Überzugsmittel können übliche Additive (z.B. Pigmente, Füllstoffe, Hilfs- und Zusatzstoffe) zugesetzt werden, wie sie auf dem Lacksektor geläufig sind. Die Mengen liegen im üblichen, dem Fachmann geläufigen, Bereich.

Beispiele für solche Additive sind Pigmente, beispielsweise farbgebende Pigmente, wie Titandioxid oder Ruß und Effektpigmente, wie Metallschuppenpigmente und/oder Perlglanzpigmente. Die erfindungsgemäß bereitgestellten Bindemittelzusammensetzungen eignen sich besonders günstig für Überzugsmittel, die derartige Effektpigmente enthalten. Bevorzugt enthalten sie Effektpigmente zusammen mit farbgebenden Pigmenten oder farbgebende Pigmente zusammen mit Füllstoffen. Weitere Beispiele für Additive sind lackübliche Füllstoffe, wie z.B. Talkum und Silikate und Hilfs- und Zusatzstoffe, wie Weichmacher, Lichtschutzmittel, Stabilisatoren und Verlaufsmittel, wie Silikonöle und Katalysatoren. Diese werden ebenfalls in übliche, dem Fachmann geläufigen, Mengen eingesetzt.

Zur Bereitung der wäßrigen Emulsionen können übliche Verfahren angewendet werden, die dem Fachmann geläufig sind.

In der Praxis kann beispielsweise so vorgegangen werden, daß ein lösemittelhaltiges Polyester-Acryloligomer gegebenenfalls weitgehend von Lösemitteln befreit wird, bevorzugt durch Destillation unter vermindertem Druck. Anschließend wird das Harz mit Basen teilweise oder ganz neutralisiert. Es können hierzu lackübliche Basen verwendet werden, wie Ammoniak oder tertiäre Amine, z.B. Triethylamin, Dimethylethanolamin oder Triethanolamin. Diese Neutralisation kann beispielsweise durch langsames Zulaufen von Basen während beispielsweise über 5 min. erfolgen.

Anschließend wird in das warme Harzgemisch vollentsalztes Wasser, z.B. in 60 bis 90 Minuten, eindosiert, beispielsweise unter intensivem Mischem. Die Herstellung der Dispersion kann dabei durch Erwärmen der Wasserphase unterstützt werden. Als Mischaggregate sind beispielsweise schnellaufende Rührer oder Rotor/Stator-Mischer geeignet. Es ist auch möglich, das Dispersionsergebnis durch Hochdruck- oder Ultraschall-Homogenisatoren zu verbessern. Das Verfahren kann kontinuierlich oder diskontinuierlich geführt werden. Man erhält eine wäßrige Öl-in-Wasser-Emulsion, die lagerstabil ist und mit Wasser ohne Probleme auf geringere, zur Applikation geeignete Festkörpergehalte eingestellt werden kann. Additive, wie Pigmente, Füllstoffe und andere Zusätze können je nach Bedarf während der Herstellung der Emulsionen und/oder nach deren Herstellung zugesetzt werden.

Ebenfalls möglich ist es, das Polyesteroligomer-Acrylat teilweise oder vollständig mit Basen zu neutralisieren und anschließend mit so viel Wasser zu emulgieren, daß eine Wasser-in-Öl-Emulsion entsteht. Die Wasser-in-Öl-Emulsion kann anschließend gelagert, dann jeweils zur Herstellung des Überzugsmittels (Lackherstellung) mit Additiven und Vernetzern gemischt und mit Wasser oder Lösemittel-Wasser-Gemischen auf die entsprechende Applikationsviskosität eingestellt werden. Dieses Verfahren hat den Vorteil, daß hierbei Additive und Vernetzer in die Harzphase und nicht, wie manchmal unerwünscht, in die wäßrige Phase gelangen.

Die erhaltenen wäßrigen Emulsionen besitzen z.B. einen HS-Wert von 80 bis 90. Sie können beispielsweise einen Festkörperbereich von 25 bis 55 Gew.-%, bezogen auf die fertige Dispersion, aufweisen. Zur Applikation können sie gegebenenfalls mit Wasser, z.B. auf eine geeignete Spritzviskosität verdünnt werden.

Bei den erfindungsgemäßen Bindemittelzusammensetzungen handelt es sich um sogenannte Zweikomponenten-Systeme. Dies bedeutet, daß die Komponenten A) und B) getrennt gelagert werden und erst vor der Anwendung bzw. zur Anwendung beispielsweise zur Herstellung von Überzugsmitteln vermischt werden. Die erfindungsgemäßen Bindemittelzusammensetzungen können in üblicher Weise zu Überzugsmitteln, beispielsweise Lacken formuliert werden. Dies erfolgt im allgemeinen durch Zusatz von Lösemitteln oder Wasser. Dabei ist es möglich, eine Mischung der Komponenten A), die auch die Komponente B) enthält, zu bereiten und diese in üblicher Weise durch den Zusatz von Lösemitteln oder Wasser und üblichen Additiven zu Überzugsmitteln aufzuarbeiten. Es besteht jedoch auch die Möglichkeit zunächst Komponente A) durch Zusatz von Wasser und/oder Lösemitteln und üblichen Additiven aufzubereiten und dann die andere Komponente B) zuzusetzen.

Die Komponenten A) und B) werden in solchen Mengen eingesetzt, daß das Verhältnis von OH-Gruppen der Komponente A) zu NCO-Gruppen der Komponente B) bei 0,5 : 1 bis 2 : 1 liegt.

Die erfindungsgemäßen Überzugsmittel können neben Wasser Cosolventien enthalten. Diese dienen zur Einstellung der Viskosität bei der Applikation, zur Beeinflussung des Verlaufs sowie um bestimmte Lackeffekte zu erzielen. Beispiele für solche Lösemittel sind aromatische Kohlenwasserstoffe, z.B. Xylole, aliphatische Kohlenwasserstoffe, z.B. n-Hexan oder Cyclohexan, Ketone, wie z.B. Aceton, Methylisopropylketon, Ester, wie z.B. Butylacetat oder Ethylacetat, Ether, wie z.B. Methoxypropanol oder Butoxypropanol. Es können aber auch Alkohole, wie z.B. Isopropanol, Hexanol oder Ethylglykol eingesetzt werden. Über den Siedepunkt oder das unterschiedliche Lösevermögen der Lösemittel können Applikations- und Verlaufseigenschaften beeinflußt werden. Die zugesetzte Lösemittelmenge hängt somit von den gewünschten Eigenschaften, insbesondere Viskositätseigenschaften, der Überzugsmittel ab. Bei Verwendung von Wasser als Lösemittel entstehen echte Lösungen, Emulsionen oder Dispersionen. Wasserhaltige Überzugsmittel besitzen einen besonders geringen Gehalt an flüchtigen organischen Bestandteilen.

Die aus den erfindungsgemäßen Bindemitteln hergestellten Überzugsmittel können auf die gewünschte Applikationsviskosität durch entsprechende Regelung des Zusatzes von Wasser und/oder Additiven eingestellt werden.

Die erfindungsgemäßen Überzugsmittel sind für Überzüge geeignet, die auf einer Vielzahl von Substraten haften, wie beispielsweise Holz, Textilien, Kunststoff, Glas, Keramik und insbesondere Metall. Weiterhin ist das erfindungsgemäße Überzugsmittel als Klebstoff verwendbar.

Das erfindungsgemäße Überzugsmittel wird nach bekannten Verfahren, wie z.B. Spritzen, Tauchen, Rollen oder Rakeln appliziert. Dabei wird auf das gegebenenfalls schon mit weiteren Lackschichten versehene Substrat das Überzugsmittel aufgetragen. Nach einer Abdunstphase kann das applizierte Überzugsmittel durch Erwärmen vernetzt werden. Die Einbrenntemperaturen liegen z.B. bei 5 bis 150°C, bevorzugt bei 20 bis 80°C. Die Schichtdicke des ausgehärteten Films beträgt etwa 15 bis 50 µm. Dabei entsteht ein vernetzter, harter, glänzender sowie säurebeständiger Lacküberzug.

Die Vernetzung kann gegebenenfalls katalysiert werden. Hierzu sind lackübliche Katalysatoren in üblichen Mengen geeignet, wie beispielsweise Dibutylzinndilaurat oder geeignete Wismutverbindungen.

Eine bevorzugte Ausführungsform ist die Applikation des erfindungsgemäßen Überzugsmittels als Klarlacküberzug auf einen Basislack, bevorzugt einen wäßrigen Basislack. Dabei kann naß-in-naß gearbeitet werden, oder der Basislack wird vorher durch Erwärmen getrocknet. Dabei entsteht eine besonders gute Haftung der beiden Schichten.

Mit den erfindungsgemäß pigmentfrei als Klarlacke formulierten Überzugsmitteln können beispielsweise Basislacke überlackiert werden, die übliche Decklackpigmente enthalten können; bevorzugt enthalten sie Effektpigmente, wie z.B. Metallic-Pigmente. Als Bindemittelbasis des Basislacks werden bevorzugt Polyester, Polyurethan- oder Acrylatharze eingesetzt. Diese Bindemittel können gegebenenfalls über Vernetzer, z.B. Melamin- oder Isocyanatderivate, vernetzt werden.

Im Folgenden werden einige Beispiele für weitere Basislacke aufgeführt, die bevorzugt mit erfindungsgemäß bereiteten pigmentfreien Klar- oder pigmenthaltigen Decklacken beschichtet werden können.

Wasserbasislacke auf der Basis von 50 bis 95 Gew.-% eines wäßrigen epoxidfunktionalisierten Emulsionspolymerisats und 95 bis 5 Gew.-% einer anionischen Polyurethandispersion mit einer Säurezahl von 5 bis 10. Als Anreibeharze für in solchen Wasserbasislacken verwendete Pigmente und Additive eignen sich besonders Poly(meth)acrylatharze (beispielsweise in einer Menge bis zu 20 Gew.-%). Beispiele für solche Wasserbasislacke sind in der DE-OS-3 628 124 beschrieben.

Basislacke auf der Basis von Polyestern mit einer Glasübergangstemperatur von > 30°C, Melaminharzen (z.B. partiell butylierten Melaminharzen), Polyharnstoffplastifizierern (beispielsweise auf der Basis eines Addukts aus Butylurethan und Formaldehyd) und einem Copolymer aus Polyethylen (85 Gew.-%) - Vinylacetat (15 Gew.-%) als Wachsdispersion. Solche Basislacke können übliche Additive, wie Celluloseacetobutyrat (beispielsweise mit unterschiedlichen Molekular-Gewichtsbereichen) enthalten. Beispiele für solche Basislacke sind in der EP-A-187 379 beschrieben.

Ein Beispiel für Basislacke auf Lösemittelbasis, die besonders für Reparaturzwecke geeignet sind, enthält physikalisch trocknende Bindemittel auf der Basis von thermoplastischem Polyester- und/oder Acrylharz im Gemisch mit Celluloseethern bzw. Celluloseestern und/oder Polyvinylacetaten. Ferner enthalten sind selbsthärtende Acrylharzbindemittel, die Farbpigmente enthalten und mit Isocyanat reagierende Wasserstoffatome aufweisen, sowie zusätzlich Gemische von in Lösemitteln gelösten Celluloseethern und/oder Celluloseestern und/oder Cellulosehalbestern. Solche Lacke sind z.B. in der DE-OS-29 24 632 beschrieben.

Sämtliche der vorstehenden Basislackformulierungen können übliche Lackadditive enthalten, sowie übliche Füllstoffe und farbgebende Pigmente sowie auch Metallicpigmente, wie Aluminium- bzw. Edelstahlbronzen und andere Effektpigmente.

Beispiele für Basislacke, die mit Klarlacken auf der Basis erfindungsgemäßer Überzugsmittel beschichtet werden können, sind auch Pulver-Lacke, wie sie beispielsweise in "Products Finishing", April 1976, Seiten 54 bis 56 beschrieben sind.

Weitere Basislacke sind in der DE-A 42 28 510 beschrieben.

Die erfindungsgemäßen Überzugsmittel können auch als Basislacke, sowie auch als Füller formuliert werden. Sie eignen sich dann besonders gut zur Herstellung von Mehrschichtlackierungen, z.B. auf dem Kraftfahrzeugsektor. Zur Formulierung als Basislacke oder Füller können übliche Additive, wie sie z.B. vorstehend für Basislacke beschrieben wurden, zugesetzt werden.

Im Vergleich mit üblichen Basislacken ergeben erfindungsgemäße Basislacke Überzüge mit einer verbesserten Feucht-Warm-Beständigkeit, bedingt durch den besonders guten Vernetzungseffekt.

Die erfindungsgemäßen Basislacke können mit üblichen Klarlacken, naß-in-naß, gegebenenfalls nach kurzer Antrocknung, überlackiert werden. Bevorzugt werden sie mit Klarlacken auf der Basis der erfindungsgemäßen Überzugsmittel überlackiert.

Die erfindungsgemäßen Überzugsmittel eignen sich besonders für Decklacke oder Klarlacke und Basislacke, die bevorzugt auf dem Kraftfahrzeugsektor, jedoch auch auf anderen Gebieten, eingesetzt werden. Die Verwendung des erfindungsgemäßen Überzugsmittels in der Mehrschichtlackierung ist besonders für die Automobil-Lackierung geeignet, sie kann jedoch auch für andere Zwecke verwendet werden, wie z.B. für Haushaltsgeräte oder in der Möbelindustrie, um besonders säurestabile Überzüge zu erhalten.

In den folgenden Beispielen beziehen sich Teile (T) und % auf das Gewicht.

### Beispiel 1

### Herstellung eines Polyesteroligomeren

336,7 g Trimethylolpropan, 366,8 Adipinsäure und 197 g Hexandiol werden mit 5 g unterphosphoriger Säure in einem mit Rührer, Abscheider, Thermometer und Rückflußkühler versehenen 2-Liter-Dreihalskolben bei 180 bis 230°C in der Schmelze auf eine Säurezahl von 20 verestert.

Anschließend wird unter Vakuum bis zu einer Säurezahl unter 1,5 kondensiert.

Das so erhaltene Produkt hat einen Einbrennrückstand von 94,5 % (1 h, 150°C), eine Viskosität von 3200 mPas (100 %ig), eine Hydroxylzahl von 460 und eine Farbzahl von 30 Hazen.

### Beispiel 2

### Herstellung eines Polyesteroligomer-Acrylatharzes

In einem 6-Liter-Vierhalskolben, der mit Rührer, Rückflußkühler, Tropftrichter und Thermometer versehen ist, werden
505,6 g Butyldiglykol
561,8 g Polyesteroligomer aus Beispiel 1
1421,4 g Glycidylester der Versaticsäure
(Handelsname der Shell AG "Cardura E10) vorgelegt und auf 144°C unter Rühren erhitzt. Anschließend wird ein Gemisch aus
196,7 g Laurylacrylat
196,7 g Styrol
393,3 g Isobutylacrylat
398,9 g Butandiolmonoacrylat
556,2 g Acrylsäure
612,4 g Isobutylmethacrylat
22,5 g Di-tertiär-butylperoxid
134,9 g Tertiärbutylperoctoat
in einem Zeitraum von 5 Stunden zudosiert. Dann wird bei ca. 144°C noch 2 Stunden nachpolymerisiert. Das Harz hat einen Festkörper von 88,3 % (1 h 150°C), eine Säurezahl von 26 mg KOH/g und eine Viskosität von 7600 mPas.

### Beispiel 3

### Herstellung einer wäßrigen Polyesteroligomer-Acrylat-Emulsion

In einem 2-Liter-Dreihalskolben, der mit Rührer, Thermometer und Tropftrichter versehen ist, werden 634 g des in Beispiel 2 beschriebenen Polyesteroligomer-Acrylatharzes unter Rühren auf 40°C erhitzt. Anschließend wird durch Zugabe von 15,8 g Dimethylethanolamin neutralisiert. Danach werden 350, 2 g vollentsalztes Wasser unter Rühren in 30 Minuten zudosiert. Die erhaltene Emulsion hat dann einen Festkörper von 55,1 % (1 h 120°C).

### Beispiel 4

### Herstellung eines 2K-Wasserklarlackes

82 T der unter 3 hergestellten Polyesteroligomer-Acrylat-Emulsion werden mit 18 T Solvesso 100 versetzt. 100 T dieser Mischung werden mit 35 T einer 80 %igen Lösung des Isocyanurates der Hexamethylendiisocyanates in Solvesso 100 vermischt. Der Klarlack wird mit Hilfe einer Rakel in einer Trockenfilmschichtdicke von ca. 35 µm aufgetragen und nach einer 10minütigen Ablüftphase bei Raumtemperatur 60 Minuten bei 80°C eingebrannt. Es resultiert ein klarer, harter Film mit guten technologischen Eigenschaften.

## Patentansprüche

1. Emulgatorfreies, hitzehärtbares Überzugsmittel in Form einer wäßrigen Emulsion; dessen Harzanteil besteht aus:
A) 30 bis 70 Gew.-% eines nach Neutralisation mit Basen wasserverdünnbarer Polyesteroligomer-Polyacrylates, erhältlich durch radikalische Polymerisation von
50 bis 95 Gew.-% eines oder mehrerer Ester ungesättigter Carbonsäuren mit hydrophoben und hydrophilen Anteilen, wobei
a) die hydrophoben Anteile auf monomeren Estern ungesättigter Carbonsäuren mit sekundären OH-Gruppen basieren, die im Gemisch mit OH-Gruppen-freien Comonomeren vorliegen können, und
b) die hydrophilen Anteile auf monomeren Estern ungesättigter Carbonsäuren mit primären OH-Gruppen und ungesättigter Monomerer mit COOH-Gruppen basieren, die im Gemisch mit OH-Gruppen-freien Comonomeren vorliegen können,
wobei das Zahlenverhältnis von aus den Komponenten b) und a) stammenden primären zu sekundären OH-Gruppen im Copolymeren 1 : 1,5 bis 1 : 2,5 beträgt, in
5 bis 50 Gew.-% eines oder mehrerer hydroxyfunktioneller Polyesteroligomerer, erhältlich durch Polykondensation von einem oder mehreren Diolen und/oder Polyolen und einer oder mehreren Dicarbonsäuren und/oder deren Derivaten, gegebenenfalls unter Mitverwendung von einem oder mehreren Monoalkoholen und/oder einer oder mehreren Monocarbonsäuren, mit einem errechneten Molekulargewicht von 200 bis 1000, einer Hydroxylzahl von 100 bis 600 und einer Säurezahl von 0 bis 15,
wobei die Monomeren a) und b) in derartigen Mengen eingesetzt werden, daß das Polyesteroligomer-Polyacrylat eine Hydroxylzahl von 100 bis 390 und eine Säurezahl von 16 bis 50 und ein Zahlenmittel des Molekulargewichts (Mn) von 1000 bis 10000 aufweist,
wobei sich die Gew.-% jeweils auf den Festkörpergehalt beziehen und auf 100 Gew.-% addieren; und
B) 70 bis 30 Gew.-% eines oder mehrerer Polyisocyanate mit freien NCO-Gruppen,
wobei sich die Gew.-% der Komponenten A) und B) jeweils auf das Festkörpergewicht der Harze beziehen und auf 100 Gew.-% addieren, und das Verhältnis von OH-Gruppen der Komponente A) und freien NCO-Gruppen der Komponente B) bei 0,5 : 1 bis 2 : 1 liegt;
und das zusätzlich Wasser und gegebenenfalls ein oder mehrere organische Lösemittel, Pigmente, Füllstoffe und/oder lackübliche Hilfs- und Zusatzstoffe enthält.

2. Überzugsmittel nach Anspruch 1, worin die Komponente B) aus zwei oder mehreren unterschiedlicher Polyisocyanaten besteht.

3. Verfahren zur Herstellung der Überzugsmittel nach einem der Ansprüche 1 oder 2, dadurch gekennzeichnet, daß man
A) 95 bis 50 Gewichtsteile eines oder mehrerer Ester ungesättigter Carbonsäuren mit hydrophoben und hydrophilen Anteilen, wobei
a) die hydrophoben Anteile auf monomeren Estern ungesättigter Carbonsäuren mit sekundären OH-Gruppen basieren, die im Gemisch mit OH-Gruppen-freien Comonomeren vorliegen können, und
b) die hydrophilen Anteile auf monomeren Estern ungesättigter Carbonsäuren mit primären OH-Gruppen und monomeren Estern ungesättigter Carbonsäuren mit COOH-Gruppen basieren, die im Gemisch mit OH-Gruppen-freien Comonomeren vorliegen können,
in Gegenwart von
5 bis 50 Gewichtsteilen eines oder mehrerer hydroxyfunktioneller Polyesteroligomerer, erhältlich durch Polykondensation von einem oder mehreren Diolen und/oder Polyolen mit einer oder mehreren Dicarbonsäuren und/oder deren Derivaten, mit einem errechneten Molekulargewicht von 200 bis 1000, einer Hydroxylzahl von 100 bis 600 und einer Säurezahl von 0 bis 15
radikalisch polymerisiert, wobei die Monomeren a) und b) in derartigen Mengen eingesetzt werden, daß das erhaltene Polyesteroligomer-Polyacrylat eine Hydroxylzahl von 100 bis 390, eine Säurezahl von 16 bis 50 und ein Zahlenmittel des Molekulargewichts (Mn) von 1000 bis 10000 aufweist, und daß das Zahlenverhältnis von primären zu sekundären OH-Gruppen (die aus den Komponenten b) und a), ohne Berücksichtigung der OH-Gruppen des Polyesteroligomeren, stammen) 1 : 1,5 bis 1 : 2,5 beträgt,
wobei sich die Gewichtsteile jeweils auf das Festkörpergewicht beziehen und auf 100 Gewichtsteile addieren,
worauf 30 bis 70 Gew.-% der erhaltenen Komponente A) vor oder nach dem Neutralisieren unmittelbar vor der Anwendung des Überzugsmittels vermischt werden mit
B) 70 bis 30 Gew.-% eines oder mehrerer Polyisocyanate mit freien NCO-Gruppen, in derartigen Anteilen, daß das Verhältnis von OH-Gruppen der Komponente A) und freien NCO-Gruppen der Komponente B) bei 0,5 : 1 bis 2 : 1 liegt,
wobei den Komponenten A) und/oder B) oder deren Gemischen, gegebenenfalls nach Neutralisation, Wasser und gegebenenfalls ein oder mehrere organische Lösemittel, Pigmente, Füllstoffe und/oder lackübliche Hilfs- und Zusatzstoffe zugesetzt werden.

4. Überzugsmittel und Verfahren nach einem der Ansprüche 1 bis 3, dadurch gekennzeichnet, daß das Polyesteroligomer-Polyacrylat der Komponente A) ein Zahlenmittel des Molekulargewichts (Mn) von 1000 bis unter 3000 aufweist.

5. Verwendung der Überzugsmittel nach einem der Ansprüche 1, 2 oder 4 in pigmenthaltiger Form, zur Herstellung von ein- oder mehrschichtigen Überzügen.

6. Verwendung der Überzugsmittel nach einem der Ansprüche 1, 2 oder 4 in pigmentfreier Form, zur Herstellung von Klarlackschichten.

7. Verwendung der Überzugsmittel nach einem der Ansprüche 1, 2 oder 4 in pigmentierter Form, zur Herstellung von Basislackschichten.

8. Verwendung der Überzugsmittel nach einem der Ansprüche 1, 2 oder 4 zur Herstellung von Füllerschichten und/oder Basislackschichten und/oder Klarlackschichten in Mehrschichtlackierungen.

9. Verwendung der Überzugsmittel nach einem der Ansprüche 1,2 oder 4 zur Herstellung von Mehrschichtlackierungen auf dem Kraftfahrzeugsektor.
